# EUROPÄISCHE PATENTSCHRIFT

(11) **EP 1 513 964 B1**
(45) Veröffentlichungstag und Bekanntmachung des Hinweises auf die Patenterteilung: **25.04.2007**
(21) Anmeldenummer: 03709611.2
(22) Anmeldetag: 13.02.2003
(51) Int. Cl.: C23C 14/58, H01R 13/03

(54) **VERBUNDWERKZEUG ZUR HERSTELLUNG EINER ELEKTRISCHEN KONTAKTFLÄCHE SOWIE VERFAHREN ZUR ERZEUGUNG EINER GLEITFÄHIGEN UND KORROSIONSARMEN ELEKTRISCHEN KONTAKTOBERFLÄCHE**
COMPOSITE MATERIAL FOR PRODUCING AN ELECTRIC CONTACT SURFACE, IN ADDITION A METHOD FOR CREATING A LUBRICATED, CORROSION-FREE ELECTRIC CONTACT SURFACE
MATERIAU COMPOSITE SERVANT A PRODUIRE UNE SURFACE DE CONTACT ELECTRIQUE ET PROCEDE DE PRODUCTION D'UNE SURFACE DE CONTACT ELECTRIQUE LUBRIFIEE ANTICORROSION

(30) Priorität: 04.06.2002 DE 10224693
(43) Veröffentlichungstag der Anmeldung: 16.03.2005
(73) Patentinhaber: ROBERT BOSCH GMBH, 70442 Stuttgart (DE)
(72) Erfinder: REHBEIN, Peter, 71287 Weissach (DE)
(86) Internationale Anmeldenummer: PCT/DE2003/000424
(87) Internationale Veröffentlichungsnummer: WO 2003/102262

(56) Entgegenhaltungen:
- FR-A- 2 669 846
- US-A- 3 620 839
- US-A- 5 075 130
- US-B1- 6 254 979
- US-B1- 6 350 326
- PATENT ABSTRACTS OF JAPAN vol. 009, no. 108 (C-280), 11. Mai 1985 (1985-05-11) & JP 59 232297 A (FURUKAWA DENKI KOGYO KK), 27. Dezember 1984 (1984-12-27)

## Beschreibung

Die Erfindung bezieht sich auf einen Verbundwerkstoff zur Herstellung einer elektrischen Kontaktfläche, bestehend aus einem Trägermaterial und einer auf dem Trägermaterial aufgebrachten Kontaktoberfläche sowie ein Verfahren zur Erzeugung einer gleitfähigen und korrosionsarmen elektrischen Kontaktoberfläche.

### Stand der Technik

Kontaktflächen werden dazu benötigt, um zwischen Stecker und Gegenstecker eine elektrische Steckverbindung zu ermöglichen und den Strom entsprechend zu leiten. Insbesondere bei Automobilanwendungen werden für die Oberflächen der elektrischen Kontaktflächen Zinn-, Gold- oder Silberoberflächen eingesetzt. Hierbei handelt es sich um feuerverzinkte oder galvanisch abgeschiedene Schichten im Bereich weniger Mikrometer, die auf ein Trägermaterial, beispielsweise einer Leiterplatine, aufgebracht werden. Die Schichten selbst zeichnen sich durch Verformbarkeit sowie.gute elektrische Leitfähigkeiten aus.

An den Grenzflächen zu den üblichen Kupfer-Basis-Legierungen, beispielsweise Bronze, die häufig als Grundwerkstoff für elektrische Steckverbindungen dienen, bildet sich durch Diffusion eine Zwischenschicht, die aus Intermetallischen Verbindungen z. B. Cu₃Sn oder Cu₆Sn₅ bestehen. Diese Zwischenschicht ist härter und kann temperaturbedingt wachsen.

Ferner sind zahlreiche Legierungen bekannt, die auf der Basis der oben angegebenen Elemente aufsetzen, beispielsweise SnPb, SnAg, SnAgCu, AuCo0,3.

### Nachteile des Standes der Technik

Insbesondere Zinnlegierungen weisen eine geringe Härte und damit auch einen geringen Verschleißwiderstand auf, wodurch durch häufiges Stecken oder fahrzeug- bzw. motorbedingte Vibration auf sehr einfache Art und Weise ein Durchrieb der Kontaktoberfläche erreicht wird, was wiederum dazu führt, dass die Steckverbindung zur Oxidation, nämlich zur sogenannten Reibkorrosion neigt. Durch diesen Durchrieb oder die entsprechende Reibkorrosion können Ausfälle von wichtigen elektrischen Komponenten zu Betriebsstörungen eines Kraftfahrzeuges führen.

Ferner erweist es sich von Nachteil, dass die oben genannten Legierungen sehr hohe Adhäsionsneigungen aufweisen, so dass die Steckkräfte, die aufgebracht werden müssen, um eine elektrische Steckverbindung herzustellen, sehr hoch sind. Auch die damit verbundene plastische Verformung ist für viele Anwendungsfälle zu hoch. Durch die Adhäsion kann sogar die Schicht aufgerissen bzw. übertragen werden oder abplatzen.

Ähnliche Prozesse können auch bei Gold- und Silberoberflächen auftreten, wenn die Kontaktoberfläche durchgerieben ist und das darunter liegende Material entsprechend oxidiert.

Dokument US 6 350 326 wird als nächstliegender Stand der Technik gegenüber dem Gegenstand des Anspruchs 1 angesehen.

### Aufgabe der Erfindung

Aufgabe der Erfindung ist es, die im Stand der Technik genannten Nachteile zu vermeiden, in dem ein Werkstoff geschaffen wird, mittels dem die zur Herstellung einer elektrischen Steckverbindung notwendigen Steckkräfte verringert und die auftretenden Oxidationsprozesse minimiert werden.

### Lösung der Aufgabe

Die Lösung der Aufgabe besteht darin, einen Verbundwerkstoff gemäß Anspruch 1 zu schaffen, der derart entsteht, dass Schmierstoff in der Kontaktoberfläche eingelagert wird.

### Vorteile der Erfindung

Die Grundidee der Erfindung besteht darin, durch eine Änderung des Reibungszustandes und der Oberflächenbeschaffenheit sowohl die Steckkräfte zur Herstellung einer elektrischen Steckverbindung zu reduzieren, als auch einen Schutz vor Oxidation und Reibkorrosion zu erzielen.

Aus zahlreichen Anwendungen ist bekannt, dass Schmierstoffe mit gezielten Additiven, beispielsweise Perfluorpolyether, Esteröle oder ähnliche Stoffe diese Wirkung erzielen. Diese Additive werden separat appliziert, wodurch sich ein gewisser Nachteil, nämlich ein separater Fertigungsschritt, Dosierkontrolle, Vorbereiten des Öls etc. darstellt. Durch die Schmierstoffinkorporation, nämlich dem Einfrieren von mikroskopischen Öldispersionen in der Kontaktoberflächenfläche ist dagegen der Vorteil gegeben, da an den verschleißenden Kontaktstellen Schmierstoffmoleküle bereit gestellt werden, und so die gewünschten Eigenschaften erzielt werden.

Ein weiterer Vorteil der Erfindung besteht darin, dass durch partiell ausgebildete Behandlung ausschließlich einzelne Kontaktbereiche speziell behandelbar sind.

Durch die Auswahl des geeigneten Werkstoffes kann erreicht werden, dass insbesondere durch die Laserbehandlung, vorzugsweise ein Nd:YAG-Laser, nur ein kurzzeitiges Aufschmelzen der Oberfläche erreicht wird. Während dieses Aufschmelzvorgangs diffundiert der Schmierstoff, der zuvor die zu behandelnde Oberfläche benetzte, in die Kontaktoberfläche hinein. Durch Abschalten des Lasers erstarrt die Kontaktoberfläche wiederum und nimmt nahezu ihren ursprünglichen Zustand ein. Die Schmierstoffmoleküle selbst haben sich jedoch in der flüssigen Struktur angelagert und diese flüssige Struktur erstarrt zusammen mit der aufgeschmolzenen Oberfläche, so dass ein Teil des Schmierstoffes nun innerhalb der Kontaktoberfläche eingelagert (inkorporiert) ist.

Gerade durch die hohe Gleitfähigkeit wird gewährleistet, dass durch den Einsteckvorgang der Stecker am Gleitkontakt entlang gleitet und nicht bereits beim ersten Einsteckvorgang Material abträgt und so eine entsprechende Korrosion provoziert.

Weitere vorteilhafte Ausgestaltungen der Erfindung gehen aus der nachfolgenden Beschreibung, den Ansprüchen sowie den Zeichnungen hervor.

### Zeichnungen

### Es zeigen

- Fig. 1: Eine schematische Ansicht eines ersten Verfahrensschrittes des erfindungsgemäßen Verfahrens;
- Fig. 2: Eine schematische Ansicht des erfindungsgemäßen Verfahrens nach Abschluss des ersten und zweiten Bearbeitungsprozesses;

### Beschreibung eines Ausführungsbeispiels

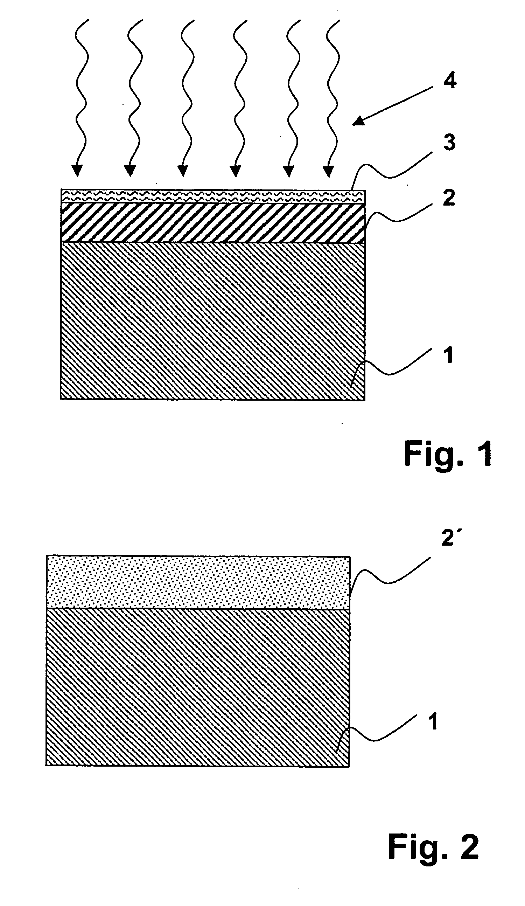

In Fig. 1 ist ein Trägermaterial 1 dargestellt, auf dem eine Kontaktoberfläche 2, beispielsweise Zinn, aufgebracht ist.

Vor dem eigentlichen Bearbeitungsprozess zur Erzeugung einer gleitfähigen korrosionsarmen elektrischen Kontaktoberfläche 2' wird die Kontaktoberfläche 2 mit einem Schmierstofffilm 3 versehen. Alternativ hierzu ist vorgesehen, das Trägermaterial 1 zusammen mit der Kontaktoberfläche 2 in ein Bad einzulassen.

Das kurzzeitige Aufschmelzen der Kontaktoberfläche erfolgt bei dem hier dargestellten Ausführungsbeispiel über einen gepulsten Laser, vorzugsweise einem Nd:YAG-Laser. In Fig. 1 sind die entsprechenden Lichtwellen 4 schematisch dargestellt. Die Lichtwellen des gepulsten Lasers durchdringen nahezu unverändert den Schmierstofffilm 3 und schmelzen die Kontaktoberfläche 2 auf. Dabei entstehen Temperaturen zwischen 200 und 400 °C, die die metallische Kontaktoberfläche 2 verflüssigen und aufgrund dieses Aggregatszustandes dringt der Schmierstofffilm 3 in die nahezu flüssige Kontaktoberfläche 2 ein und vermischt sich mit dieser.

Aufgrund der an den Schichtwerkstoff anzupassenden Pulsung (Leistung, Dauer) des Nd:YAG-Lasers erfolgt die Aufschmelzung gezielt, so dass unmittelbar nach dem Ende der entsprechenden Pulse die Kontaktoberfläche 2 zusammen mit dem bereits in die flüssige Kontaktoberfläche diffundierten Schmierstoff erstarrt und so die entsprechende Position gemäß Fig. 2 erreicht. Die neue Kontaktoberfläche 2' auf dem Trägermaterial 1 entspricht also einer Mikro- oder Nano-Dispersion aus metallischer Schicht und Schmierstoff.

## Patentansprüche

1. Verbundwerkstoff zur Herstellung eines elektrischen Kontaktes, bestehend aus einem Trägermaterial (1) und einer auf dem Trägermaterial (1) aufgebrachten neuen metallischen Kontaktoberfläche (2), wobei durch Aufschmelzen einer metallischen Kontaktoberfläche (2) sowie einem auf der metallischen Kontaktoberfläche (2) aufgebrachtem Schmierstofffilm (3) die neue metallische Kontaktoberfläche (2') gebildet ist, in der, nach der Erstarrung der neuen metallischen Kontaktoberfläche (2'), der Schmierstoff (3) des filmes in der neuen metallischen Kontaktoberfläche eingelagert ist.

2. Verbundwerkstoff nach Anspruch 1, **dadurch gekennzeichnet, dass** die Kontaktoberfläche (2) aus Zinn besteht.

3. Verbundwerkstoff nach Anspruch 1 oder 2, **dadurch gekennzeichnet, dass** der Schmierstofffilm (3) eine Öldispersion ist.

4. Verbundwerkstoff nach Anspruch 3, **dadurch gekennzeichnet, dass** der Schmierstofffilm (3) Additive enthält.

## Claims

1. Composite material for producing an electric contact comprising a carrier material (1) and a new metallic contact surface (2) applied to the carrier material (1), the new metallic contact surface (2') being formed by melting a metallic contact surface (2) and a lubricant film (3) applied to the metallic contact surface (2), in which, after solidification of the new metallic contact surface (2'), the lubricant of the film is incorporated in the new metallic contact surface.

2. Composite material according to Claim 1, **characterized in that** the contact surface (2) consists of tin.

3. Composite material according to Claim 1 or 2, **characterized in that** the lubricant film (3) is an oil dispersion.

4. Composite material according to Claim 3, **characterized in that** the lubricant film (3) contains additives.

## Revendications

1. Matériau composite pour la fabrication d'un contact électrique, composé d'un matériau support (1) et d'une nouvelle surface de contact métallique (2') déposée sur le matériau support (1), en formant la nouvelle surface de contact métallique (2') par fusion d'une surface de contact métallique (2) ainsi que d'un film de lubrifiant (3) déposé sur la surface de contact métallique (2), dans laquelle le lubrifiant (3) du film est incorporé dans la nouvelle surface de contact métallique après la solidification de la nouvelle surface de contact métallique (2').

2. Matériau composite selon la revendication 1,
**caractérisé en ce que**
la surface de contact métallique (2) est composée d'étain.

3. Matériau composite selon la revendication 1 ou 2,
**caractérisé en ce que**
le film de lubrifiant (3) est une dispersion d'huile.

4. Matériau composite selon la revendication 3,
**caractérisé en ce que**
le film de lubrifiant (3) contient des additifs.
